# EUROPEAN PATENT SPECIFICATION

(11) **EP 3 760 466 B1**
(45) Date of publication and mention of the grant of the patent: **07.06.2023**
(21) Application number: 19184495.0
(22) Date of filing: 04.07.2019
(51) Int. Cl.: B60K 35/00, B60K 37/00, B60K 37/04, B62D 25/14, B60H 1/00

(54) **SELF-SUPPORTING CARRIER STRUCTURE FOR AN INSTRUMENT PANEL IN A VEHICLE, INSTRUMENT PANEL COMPRISING SUCH A CARRIER STRUCTURE, VEHICLE EQUIPPED WITH SUCH AN INSTRUMENT PANEL AND PROCESS FOR MANUFACTURING SUCH AN INSTRUMENT PANEL**
SELBSTTRAGENDE TRÄGERSTRUKTUR FÜR EINE INSTRUMENTENTAFEL IN EINEM FAHRZEUG, INSTRUMENTENTAFEL MIT SOLCH EINER TRÄGERSTRUKTUR, FAHRZEUG MIT SOLCH EINER INSTRUMENTENTAFEL UND VERFAHREN ZUR HERSTELLUNG SOLCH EINER INSTRUMENTENTAFEL
STRUCTURE DE SUPPORT AUTOPORTANT POUR UN TABLEAU DE BORD DANS UN VÉHICULE, TABLEAU DE BORD COMPRENANT UNE TELLE STRUCTURE DE SUPPORT, VÉHICULE ÉQUIPÉ D'UN TEL TABLEAU DE BORD ET PROCÉDÉ DE FABRICATION D'UN TEL TABLEAU DE BORD

(43) Date of publication of application: 06.01.2021
(73) Proprietor: Motherson Innovations Company Limited, London EC2N 2AX (GB); Volkswagen AG, 38440 Wolfsburg (DE)
(72) Inventor: Dormanns, Jan, 79183 Waldkirch (DE); Wilsdorf, Simone, 38442 Wolfsburg (DE); Conic, Miodrag, 38114 Braunschweig (DE)
(74) Representative: Westphal, Mussgnug & Partner Patentanwälte mbB

(56) References cited:
- WO-A1-2004/041565
- WO-A1-2015/044076
- DE-A1-102016 217 670
- US-A1- 2004 108 744

## Description

The present invention relates to a self-supporting carrier structure for an instrument panel for a vehicle. Furthermore, the invention is directed to an instrument panel comprising such a carrier structure and is directed to a vehicle equipped with such an instrument panel. Moreover the invention relates to a process for manufacturing such an instrument panel.

Known instrument panels are usually mounted on a cross beam that extends between the left and the right A-pillar of a given vehicle. Moreover, the cross beam is fastened to these A-pillars and supported by vertical girders and may be connected to the partition wall. Typically the instrument panels are also fastened to a partition wall separating the passenger compartment from a front compartment of the vehicle. Conventional vehicles driven by combustion engines comprise a transmission tunnel on which a gear shift is mounted. The transmission tunnel is covered by a center console dividing at least the two front passenger seats from each other. The center console may also be used to support the instrument panel and the vertical girders. Such instrument panels are disclosed in EP 2 019 026 B1. Other carrier structures and instrument panels for or in vehicles are disclosed in WO 2004/041565 A1, DE 102016 217670 A, US 2004/108744 A1 and WO 2015/044076 A1.

In the pursuit of reducing the global carbon dioxide emissions the attention of car makers and suppliers increases to reduce the weight of automobiles, including the aim to reduce the weight of the vehicle instrument panel and its carrier structure.

One concept to optimize the carrier structure of the instrument panel is to conduct a load path analysis using bionic topology optimization using methods like "soft-kill-option". The resulting carrier structure provides a high rigidity at a reduced material volume. As a consequence, the weight of the carrier structure so obtained is significantly lower compared to prior art instrument panels mounted on a cross beam. However, load path analyses conducted as described above typically result in solid support elements.

The at the date of filing of this application not yet published patent application EP 18 150714 (application number) of the applicants describes a method to conduct the bionic topology optimization such that a carrier structure is obtained comprising a network of a plurality of hollow and solid support elements. This bionic topology optimization can be considered as a second load path analysis that follows the first load path analysis as described above. In the second load path analysis respective boundary conditions have to be defined. These boundary conditions may include the identification of support elements that should be hollow. EP 18 150714 (application number) describes to use the hollow support elements as an air duct for guiding air into a passenger compartment of a given vehicle. For this purpose at least some of the hollow support elements are arranged in a coherent network. The instrument panel comprising a self-supporting carrier structure obtained as described offers a high degree of functional integration and lightweight construction. As mentioned, at least some of the hollow support elements are used as an air duct. It is desirable to position the air outlets such that they optimally and homogeneously introduce the air into the passenger compartment. Moreover, the shape and the course of the air duct may be optimized using Computational Fluid Dynamics (CFD) .

The optimization of the air flow through the hollow support elements on one hand and the optimization of the load paths for the vehicle components on the other hand, in consideration of the aim to reduce the weight of the carrier structure, typically lead to a conflict of aims. As a result, the optimization of the air flow and the load paths and the reduction of weight may only partially be implementable or one aim needs to be prioritized over the other.

It is thus one task of the present invention to present a self supporting carrier structure for an instrument panel in which the conflict of aims described above may be reduced. In particular the air flow through the hollow support elements and the load paths should be optimized and the weight decreased. Moreover, it is a further task of the present invention to present an instrument panel comprising such a carrier structure, a vehicle including such an instrument panel and a process for manufacturing such an instrument panel.

The task is solved by the features specified in claims 1, 10, 12 and 13. Advantageous embodiments are the subject of the dependent claims.

According to the present invention a self-supporting carrier structure for an instrument panel for a vehicle comprises a network of a plurality of first hollow support elements, and of second hollow support elements and/or solid support elements arranged according to the results of a load path analysis. The first hollow support elements form at least one manifold used as an air duct comprising at least one air inlet for introducing air into the hollow support elements and at least one air outlet for guiding the air into a passenger compartment of a vehicle, and the first hollow support elements, the second hollow support elements and/or the solid support elements serve for supporting at least one vehicle component arranged in or on the instrument panel, wherein at least some of the second hollow support elements group and/or at least some of the solid support elements are arranged such that they form an intersection in which the second hollow support elements or the solid support elements penetrate the first hollow support elements, or a fusion section in which the second hollow support elements or the solid support elements merge with the first hollow support elements such that the second hollow support elements or the solid support elements partially extend into the manifold.

One significant aspect of the present disclosure is that the first hollow support elements may be intersected by or merge with the second hollow support elements or the solid support elements. The possibility to integrate intersections and/or fusion sections into the network significantly increases the freedom of design regarding shape, course and dimensions of the support elements. The optimization of the air flow and the load paths can be realized to a significantly higher degree than previously possible. In consequence of the optimized load paths the respective support elements may be provided with smaller dimensions which lead to a reduced weight of the instrument panel.

In accordance with another embodiment, the second hollow support elements and/or the solid support elements which penetrate or merge with the first hollow support elements have a fluid flow-optimized shape. To reduce the aerodynamic resistance the shape inside the manifold may be changed accordingly, for example in accordance with an airfoil or a streamlined spindle. The optimized flow inside the manifold reduces the energy needed to create the desired air flow rate through the manifold and inside the passenger compartment. Additionally the noise that would otherwise be created by turbulences may be reduced.

In a further embodiment the second hollow support elements or the solid support elements are encompassed by a cladding inside the manifold. Depending on the position of the intersection or the fusion section it may be advantageous not to change the shape of the second support elements or the solid support elements inside the manifold but to use claddings instead to optimize the air flow through the manifold. In particular the use of claddings may enable a large-scale flow-optimization inside the manifold. In comparison, such a large-scale flow-optimization by changing the shape of the second support elements or the solid support elements inside the manifold would lead to an undesirable effort and additional weight.

In another embodiment a hollow space is formed between the cladding and the second hollow support elements or the solid support elements. The hollow space may be completely or partially filled or reinforced by honeycombs or any kind of grid structure. The hollow space may be filled by a thermosetting resin or the like. The grid structure and the honeycombs may be made of the same material as the claddings and the support elements. In all cases the rigidity of the entire carrier structure can be further increased.

The number of vehicle components integrated into instrument panels is constantly increasing. Examples of such components are displays of the route guidance system, head-up displays and glove boxes, only to mention a few. One vehicle component to mention explicitly is the passenger air bag. To ensure its proper function the airbag needs to be reliably supported in particular during release. Moreover, the carrier structure needs to provide a chute channel for the airbag.

According to another embodiment the first hollow support elements, the second hollow support elements and/or the solid support elements form at least one bearing section for bearing at least one vehicle component and/or a mounting section for mounting at least one vehicle component. As the carrier structure provides integrated bearing sections for a number of vehicle components, their assembly can be conducted in a fast and easy manner. The number of parts needed for bearing and mounting the vehicle components can be significantly reduced.

In accordance with another embodiment the vehicle component is embodied as a steering column, at least one head-up display, an air bag, a vehicle display, a vehicle sensor, a glove box and/or other electric or electronic devices. This listing is not conclusive, however, modern vehicles are typically equipped with these vehicle components. The carrier structure according to this embodiment thus fulfils the needs of modern vehicle manufacturing.

In a further embodiment the manifold is designed for guiding air to the mounting section and/or to the bearing section and/or to any electric or electronic component mounted on the carrier structure. Next to head-up displays, sensors or other displays, such electric or electronic components may be cameras, interactive surface elements or similar components. Interactive surface elements may be used for controlling the air condition, the sound system, the electric seat adjustment or the like.

With advancing digitalization the number of displays and electric or electronic components inside a vehicle is increasing. However, in operation the electric components and displays produce heat that needs to be dissipated to avoid overheating. Moreover, the operation of the components and displays may lead to an undesirable increase in temperature of the passenger compartment. The carrier structure can be formed such that it guides at least a part of the air flowing through the hollow support elements to the surroundings of the displays and electric or electronic components. As displays are visible from the passenger compartment, the air is guided to their backside such that the heat produced by the display is dissipated while the air duct is not visible for the vehicle passenger.

In another embodiment the carrier structure forms at least one chute channel for an airbag of the vehicle. In known instrument panels chute channels are often manufactured by injection molding. However, chute channels may lead to material accumulation and thus prolonged cooling times during injection molding and resulting in deficiencies in the optical appearance of the instrument panel. As the chute channels form an integrated part of the presented carrier structure such problems are omitted.

According to another embodiment the carrier structure forms at least one mechanical connection section for connecting the carrier structure with neighboring construction elements of the vehicle.

Another example of the invention is directed to an instrument panel for a vehicle, comprising a self-supporting carrier structure according to one of the embodiments previously presented, and a cover layer covering the carrier structure. The cover layer may be produced by injection molding. The technical effects and advantages as discussed with regard to the present carrier structure equally apply to the instrument panel.

According to another example the self-supporting carrier structure and/or the cover layer or the entire instrument panel are made in one piece. Depending on the tools available and depending on the complexity of the carrier structure and/or the cover layer it may be advantageous to manufacture a plurality of separate parts and connect them to each other for the final carrier structure or the final cover layer. However, in particular due to advances in additive manufacturing it may be possible to manufacture the carrier structure and/or the cover layer or the entire instrument panel in one piece. The less separate parts have to be manufactured the faster and less complex the production process of the instrument panel.

An implementation of the present invention is directed to a vehicle comprising a first A-pillar and a second A-pillar, and an instrument panel according to the examples presented above, or a carrier structure according to one of the embodiments described above fastened to the first A-pillar and the second A-pillar. The technical effects and advantages as discussed with regard to the present carrier structure equally apply to the vehicle. Next to the facilitated assembly the reduced weight contributes to the pursued reduction of the energy consumption of the vehicle. Moreover, the presented instrument panel allows for new design concepts of passenger compartments. Particularly to avoid the formation of resonance frequencies it may be desirable to fasten the instrument panel also on the partition wall. It is also possible to fasten the carrier structure to the partition wall independent from the instrument panel. Moreover, the carrier structure may be fastened to the partition wall employing an intermediate component such as a receptacle of a head-up display. Additional intermediate mounting parts may also be employed between the carrier structure and the A-pillars. Depending on the properties of the instrument panel the same may also be supported on the vehicle floor or the transmission tunnel.

A realization of the present invention is directed to a process for manufacturing a carrier structure according to one of the embodiments previously presented or directed to a process for manufacturing an instrument panel according to one of the examples described above comprising the steps of additive manufacturing, in particular of fused deposition modelling, screw extrusion additive manufacturing or selective laser sintering. These steps make it possible to manufacture complex structures that could not previously be manufactured. One or more thermosetting or thermoplastic resins may be used as materials for the instrument panel.

According to another realization the self-supporting carrier structure and/or the cover layer or the entire instrument panel are made in one piece. The production process is thereby optimized, as mounting and bonding steps, such as screwing or welding are omitted and processing time and equipment invest are reduced. The use of additive manufacturing, particularly of fused deposition modeling, screw extrusion additive manufacturing or selective laser sintering enables the manufacturing of the carrier structure, the cover layer or the instrument panel in one piece. Moreover, the production process as such is facilitated as the need to transfer the instrument panel from one tool to another can be eliminated.

The present invention is described in detail with reference to the drawings attached wherein
- Figure 1: shows a perspective view of an inventive instrument panel comprising a carrier structure,
- Figure 2: is a partial three-dimensional view of a first embodiment of a carrier structure according to the present invention that may be incorporated into the instrument panel shown in Figure 1,
- Figures 3A and 3B: show principle sketches of an intersection of the carrier structure reproduced in Figure 2,
- Figure 4A: is a partial three-dimensional view of a second embodiment of a carrier structure according to the present invention,
- Figure 4B: shows a second view of Figure 4A, however, comprising partial sectional views,
- Figure 4C: shows a principle sketch of a cladding inside the manifold,
- Figure 5A: is a partial three-dimensional third view of a second embodiment of a carrier structure according to the present invention,
- Figures 5B and 5C: are principle sketches of the area X as identified in Figure 5A, and
- Figure 5D: shows the third view of Figure 5A, however, comprising a partial sectional view in the area Y as identified in Figure 5A,
- Figure 6: is a schematic sectional sketch through the inventive instrument panel, and
- Figure 7: is a schematic sketch of a vehicle equipped with the inventive instrument panel.

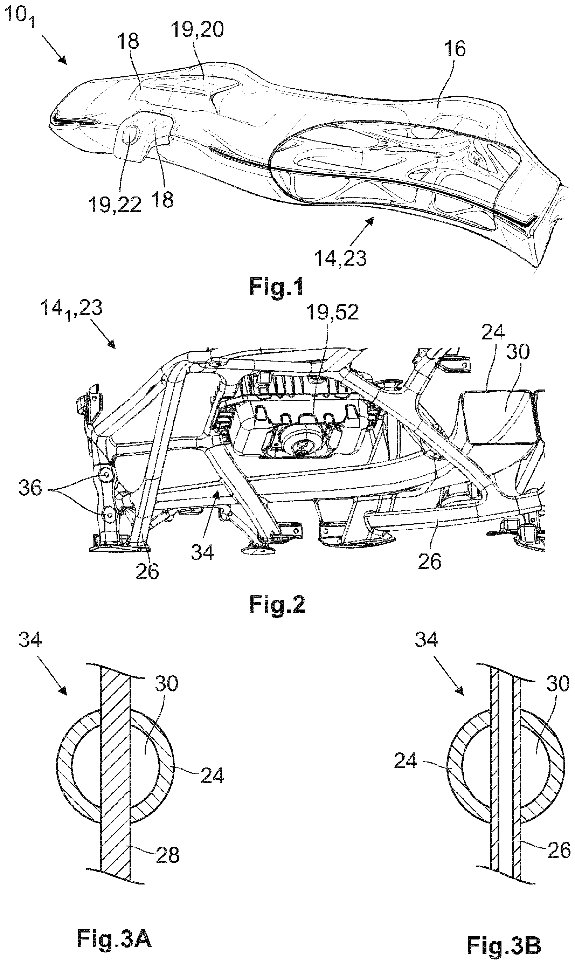

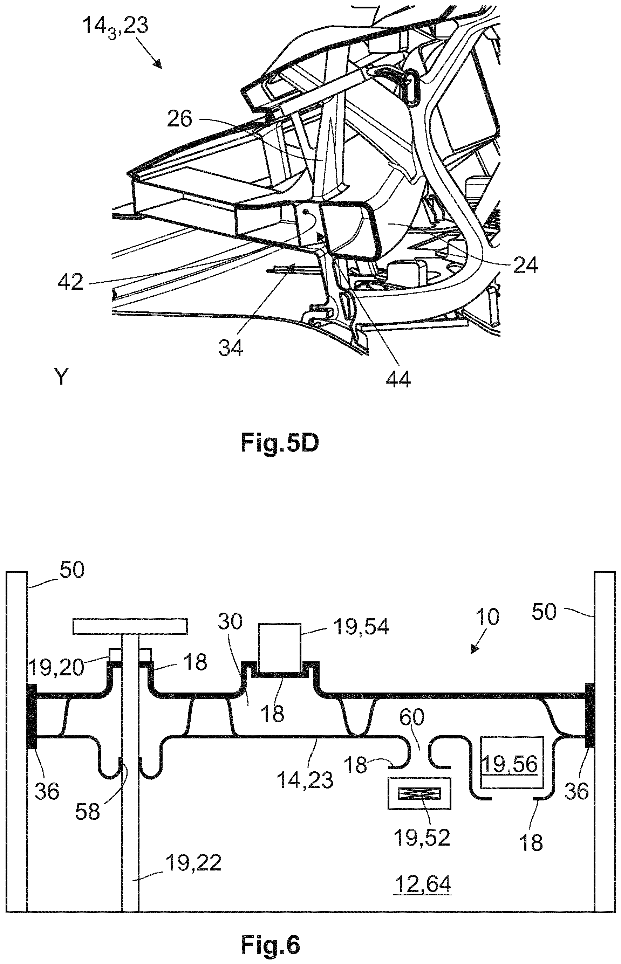

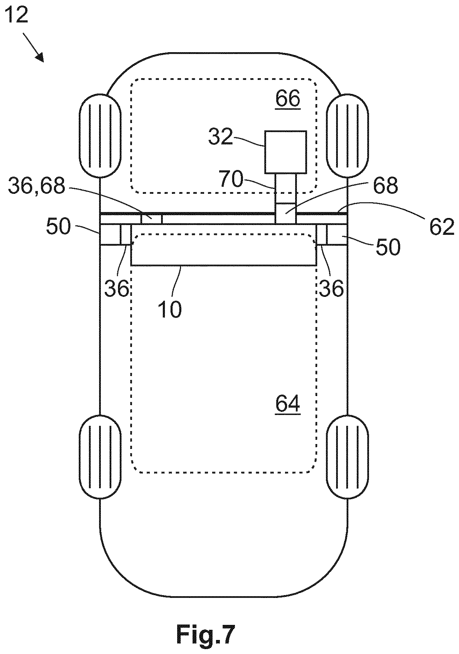

Figure 1 shows an instrument panel 10 for a vehicle 12 (see Figures 6 and 7) comprising a self-supporting carrier structure 14 which may be designed like one of the carrier structures 14 a part of which is illustrated in Figures 2, 4A, 4B, 5A and 5D. The instrument panel 10 comprises a cover layer 16 that covers the carrier structure 14. The cover layer 16 may be an integral part of the carrier structure 14 and also contribute to the load bearing capacity of the instrument panel 10. Alternatively the cover layer 16 may be a separate unit that may be produced by injection molding and being fiber-reinforced. The cover layer 16 may as an example also be produced by grouting of fiber-reinforced thermoplastic mats, e.g., made of natural fiber reinforced polypropylene (NFPP).

Figure 1 also shows a number of mounting sections 18 for mounting vehicle components 19, in this case a mounting section 18 for a head-up display 20 and a mounting section 18 for a steering column 22 (see Figure 6).

In Figure 2 a first embodiment of the inventive self supporting carrier structure 14₁ is shown by means of a partial three-dimensional view. The carrier structure 14₁ comprises a network 23 of a plurality of first hollow support elements 24, of second hollow support elements 26 and of solid support elements 28 (see Figure 3A). At least some of the first hollow support elements 24 form a coherent manifold 30 that is used as an air duct for conducting air produced by an air conditioner 32 into a passenger compartment 64 of the vehicle 12 (see Figure 7).

At least some of the second hollow support elements 26 and/or at least some of the solid support elements 28 are arranged such that they form an intersection 34 in which the second hollow support elements 26 or the solid support elements 28 penetrate the first hollow support elements 24. Two embodiments of the intersections 34 are illustrated in Figure 3A and 3B. In the embodiment shown in Figure 3A the first hollow support element 24 is penetrated by a solid support element 28 whereas in the embodiment of Figure 3B the first hollow support element 24 is penetrated by a second hollow support element 26.

Referring to Figure 2 the carrier structure 14₁ forms at least one mechanical connection section 36 for connecting the carrier structure 14₁ with neighboring construction elements of the vehicle 12. Such neighboring construction elements are in particular A-pillars 50 of the vehicle 12 (see Figures 6 and 7). Moreover, a vehicle component 19, in this case an airbag 52, is mounted in the carrier structure 14₁.

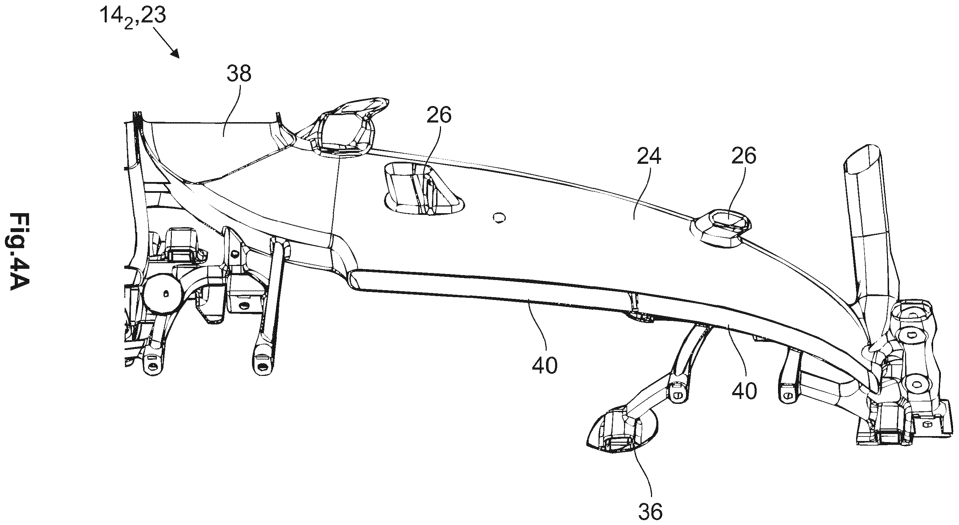

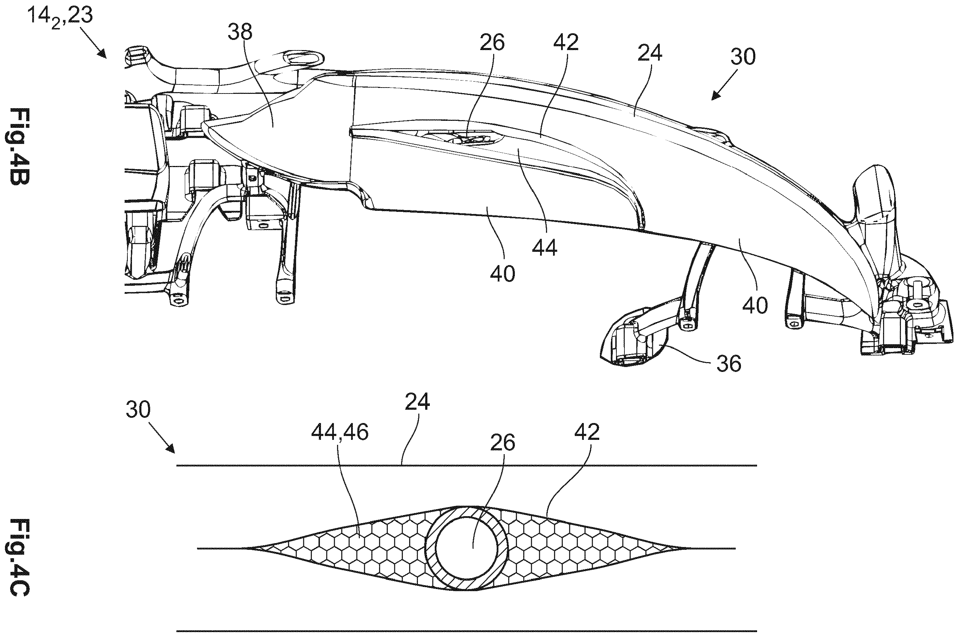

In Figure 4A a partial three-dimensional view of a carrier structure 14₂ according to a second embodiment of the present invention is illustrated, whereas Figure 4B also shows the second embodiment of Figure 4A, however, comprising partial sectional views. Figures 4A and 4B show a first hollow support element 24 which forms a manifold 30 and comprises at least one air inlet 38 for introducing air into the hollow support element and at least one air outlet 40 for guiding the air into the passenger compartment 64 of the vehicle 12. The first hollow support element 24 is penetrated by a second hollow support element 26. However, the shape of the second hollow support element 26 inside the manifold 30 is not flow optimized for the air flowing through the manifold 30. Instead, inside the manifold 30 the second hollow support element 26 is encompassed by a cladding 42 that serves for guiding the air inside the manifold 30. A hollow space 44 is formed between the cladding 42 and the second hollow support element 26.

Figure 4C is a principle sketch of the cladding 42 encompassing the second hollow support element 26 inside the manifold 30. The hollow space 44 can be partially or completely filled by material or, as shown, may be reinforced by honeycombs or a grid structure 46. The same may apply in case the first hollow support element 24 is penetrated by a solid support element 28.

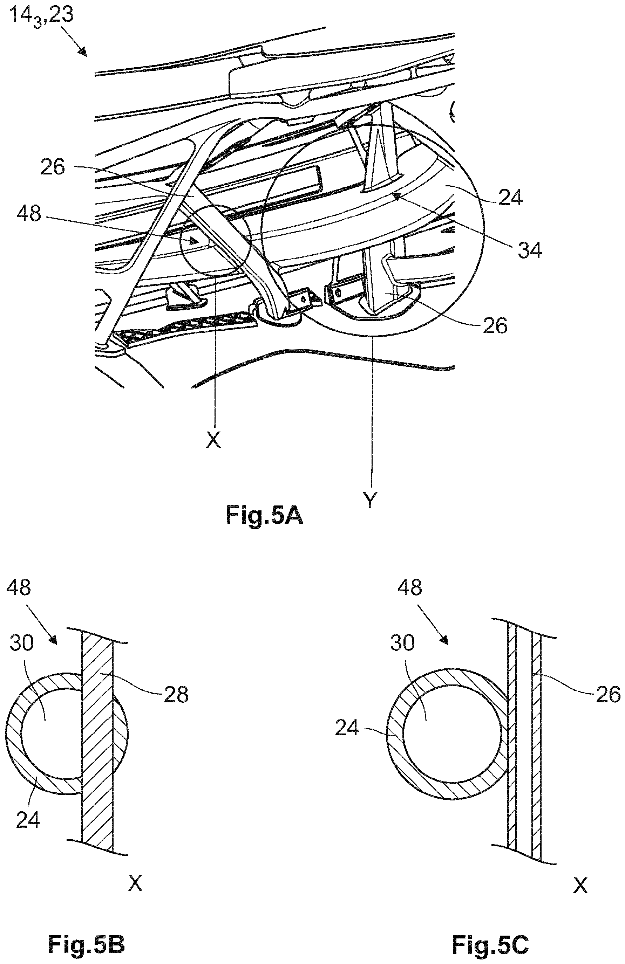

Figure 5A is a partial three-dimensional view of a third embodiment of a carrier structure 14₃ according to the present invention. In the area indicated by X the carrier structure 14₃ forms a fusion section 48 in which the second hollow support element 26 merges with the first hollow support element 24. Two embodiments of the fusion sections 48 are reproduced in Figures 5B and 5C by means of principle sketches. In the embodiment shown in Figure 5B a solid support element 28 is merged with a first hollow support element 24 so that a part of the solid support element 28 is extending into the manifold 30 and thus influences the air flow through the manifold 30. In the embodiment shown in Figure 5C, which is not according to the invention, a second hollow support element 26 merges with a first hollow support element 24, however, in this case the second hollow support element 26 does not protrude into the manifold 30 so that it does not influence the air flow through the manifold 30.

Figure 5D shows the third embodiment of the carrier structure 14₃ of Figure 5A comprising a partial sectional view in the area Y as identified in Figure 5A. In this case the second hollow support element 26 forms an intersection 34 with the first hollow support element 24 similar to the intersection 34 shown in Figure 4B. In this case the hollow space 44 between the cladding 42 and the second hollow support element 26 is not filled.

Figure 6 is a principle sectional sketch through the instrument panel 10 according to the invention. The support structure is mounted on two A-pillars 50 of a vehicle 12 using the connection sections 36. As already mentioned, the carrier structure 14₁ forms a number of mounting sections 18 for vehicle components 19, for example the head-up display 20. In Figure 6 further vehicle components 19 like an airbag 52, a vehicle display 54 and a glove box 56 are shown that are mounted on or in the instrument panel 10. The instrument panel 10 also forms a bearing section 58, in this case for the steering column 22. Moreover, the carrier structure 14₁ of the instrument panel 10 forms a chute channel 60 for the airbag 52.

The manifold 30 is designed for guiding air to the electric or electronic vehicle components 19 mounted on or in the instrument panel 10, such as the vehicle display 54. Of course air may be guided to electric or electronic vehicle components 19 other than displays, e.g., to cameras, sensors or interactive surface elements. The common features of these devices is that they produce heat in operation that needs to be dissipated to avoid heat accumulation that may lead to mal-functioning. In some cases it may be necessary to provide heated air to avoid the condensation of moisture on the vehicle components 19. In this case the air is conditioned accordingly.

Figure 7 shows a schematic sketch of a vehicle 12 equipped with the inventive instrument panel 10. It is evident that the instrument panel 10 is not only fastened to the two A-pillars 50 of the vehicle 12 but also to a partition wall 62 that separates a passenger compartment 64 from a front compartment 66, e.g. an engine compartment. The partition wall 62 is designed to absorb the forces imposed by the instrument panel 10. In the partition wall 62 a connecting plate 68 is optionally arranged that is connected to the carrier structure 14₁. The connecting plate 68 provides a fluid communication between the front compartment 66 and the air inlet 38 of the manifold 30. An air conditioner 32 is located in the front compartment 66 that provides air conditioned according to the passengers' request. The air conditioner 32 is connected to the connecting plate 68 by a tubing 70.

### Reference signs

- 10: instrument panel
- 12: vehicle
- 14: carrier structure
- 14₁ - 14₃: carrier structure
- 16: cover layer
- 18: mounting section
- 19: vehicle component

- 20: head-up display
- 22: steering column
- 23: network
- 24: first hollow support element
- 26: second hollow support element
- 28: solid support element

- 30: manifold
- 32: air conditioner
- 34: intersection
- 36: connection section
- 38: air inlet

- 40: air outlet
- 42: cladding
- 44: hollow space
- 46: honeycomb, grid structure
- 48: fusion section

- 50: A-pillar
- 52: airbag
- 54: vehicle display
- 56: glove box
- 58: bearing section

- 60: chute channel
- 62: partition wall
- 64: passenger compartment
- 66: front compartment
- 68: connecting plate

- 70: tubing

## Claims

1. Self-supporting carrier structure (14) for an instrument panel (10) in a vehicle (12), comprising
- a network (23) of a plurality of first hollow support elements (24) and of second hollow support elements (26) and/or solid support elements (28) arranged according to the results of a load path analysis, **characterized in that**
- the first hollow support elements (24) form at least one manifold (30) used as an air duct comprising
o at least one air inlet (38) for introducing air into the hollow support elements (12) and
o at least one air outlet (40) for guiding the air into a passenger compartment (64) of a vehicle (12), and
- the first hollow support elements (24), the second hollow support elements (26) and/or the solid support elements (28) serve for supporting at least one vehicle component (19) arranged in or on the instrument panel (10),
**characterized in that**
- at least some of the second hollow support elements (26) and/or at least some of the solid support elements (28) are arranged such that they form
o an intersection (34) in which the second hollow support elements (26) or the solid support elements (28) penetrate the first hollow support elements (24), or
o a fusion section (48) in which the second hollow support elements (26) or the solid support elements (28) merge with the first hollow support elements (24) such that the second hollow support elements (26) or the solid support elements (28) partially extend into the manifold (30).

2. Self-supporting carrier structure (14) according to claim 1,
**characterized in that** the second hollow support elements (26) and/or the solid support elements (28) which penetrate or merge with the first hollow support element (24) have a fluid flow-optimized shape.

3. Self-supporting carrier structure (14) according to one of the claims 1 or 2,
**characterized in that** the second hollow support elements (26) or the solid support elements (28) are encompassed by a cladding (42) inside the manifold (30).

4. Self-supporting carrier structure (14) according to claim 3, **characterized in that** a hollow space (44) is formed between the cladding (42) and the second hollow support elements (26) or the solid support elements (28), the hollow space (44) being
- completely or partially filled or
- reinforced by honeycombs or a grid structure (46).

5. Self-supporting carrier structure (14) according to one of the preceding claims,
**characterized in that** the first hollow support elements (24), the second hollow support elements (26) and/or the solid support elements (28) form at least one bearing section (58) for bearing at least one vehicle component (19) and/or a mounting section (18) for mounting at least one vehicle component (19).

6. Self-supporting carrier structure (14) according to one of the preceding claims,
**characterized in that** the vehicle component (19) is embodied as a steering column (42), a head-up display (20), an air bag, a vehicle display (54), a vehicle sensor, a glove box (56) and/or other electric or electronic devices.

7. Self-supporting carrier structure (14) according to claim 5 or claim 5 and claim 6,
**characterized in that** the manifold (30) is designed for guiding air to the mounting section (18) and/or to the bearing section (58) and/or any electric component mounted on the carrier structure (14).

8. Self-supporting carrier structure (14) according to one of the claims 6 or 7,
**characterized in that** the carrier structure (14) forms at least one chute channel (60) for an airbag (52) of the vehicle (12) .

9. Self-supporting carrier structure (14) according to one of the preceding claims, **characterized in that** the carrier structure (14) forms at least one mechanical connection section (36) for connecting the carrier structure (14) with neighboring construction elements of the vehicle (12).

10. Instrument panel (10) in a vehicle (12), comprising
- a self-supporting carrier structure (14) according to one of the preceding claims, and
- a cover layer (16) covering the carrier structure (14).

11. Instrument panel (10) according to Claim 10,
**characterized in that**
- the self-supporting carrier structure (14), and/or
- the cover layer (16), or
- the instrument panel (10) are made in one piece.

12. Vehicle (12), comprising
o a first A-pillar (50) and a second A-pillar (50), and an instrument panel (10) according to one of the claims 10 or 11, or
o a carrier structure (14) according to one of the claims 1 to 9,
fastened to the first A-pillar (50) and the second A-pillar (50).

13. Process for manufacturing an instrument panel (10) according to one of the claims 10 or 11 or for manufacturing a carrier structure (14) according to one of the claims 1 to 9, comprising the steps of additive manufacturing, in particular fused deposition modeling, screw extrusion additive manufacturing or selective laser sintering.

14. Process according to claim 13, **characterized in that** the self-supporting carrier structure (14) and/or the cover layer (16), or the instrument panel (10) are made in one piece.

## Patentansprüche

1. Selbsttragende Trägerstruktur (14) für eine Instrumententafel (10) in einem Fahrzeug (12), die aufweist
- ein Netzwerk (23) aus mehreren ersten hohlen Stützelementen (24) und aus zweiten hohlen Stützelementen (26) und/oder massiven Stützelementen (28), die entsprechend den Ergebnissen einer Lastpfadanalyse angeordnet sind, **dadurch gekennzeichnet, dass**
- die ersten hohlen Stützelemente (24) zumindest einen Krümmer (30) bilden, der als Luftkanal verwendet wird, der aufweist
o zumindest einen Lufteinlass (38) zum Einführen von Luft in die hohlen Stützelemente (12) und
o zumindest einen Luftauslass (40) zum Leiten der Luft in einen Fahrgastraum (64) eines Fahrzeugs (12), und
- die ersten hohlen Stützelemente (24), die zweiten hohlen Stützelemente (26) und/oder die massiven Stützelemente (28) zum Abstützen zumindest einer in oder an der Instrumententafel (10) angeordneten Fahrzeugkomponente (19) des dienen,
**dadurch gekennzeichnet, dass**
- zumindest einige der zweiten hohlen Stützelemente (26) und/oder zumindest einige der massiven Stützelemente (28) so angeordnet sind, dass sie
o eine Überschneidung (34), bei der die zweiten hohlen Stützelemente (26) oder die massiven Stützelemente (28) die ersten hohlen Stützelemente (24) durchdringen, oder
o einen Verschmelzungsabschnitt (48), in dem die zweiten hohlen Stützelemente (26) oder die massiven Stützelemente (28) mit den ersten hohlen Stützelementen (24) verschmelzen, so dass sich die zweiten hohlen Stützelemente (26) oder die massiven Stützelemente (28) teilweise in den Krümmer (30) erstrecken,
bilden.

2. Selbsttragende Trägerstruktur (14) nach Anspruch 1, **dadurch gekennzeichnet, dass** die zweiten hohlen Stützelemente (26) und/oder die massiven Stützelemente (28), die das erste hohle Stützelement (24) durchdringen oder mit ihm verschmelzen, eine strömungsoptimierte Form aufweisen.

3. Selbsttragende Trägerstruktur (14) nach einem der Ansprüche 1 oder 2,
**dadurch gekennzeichnet, dass** die zweiten hohlen Stützelemente (26) oder die massiven Stützelemente (28) von einer Ummantelung (42) innerhalb des Krümmers (30) umschlossen sind.

4. Selbsttragende Trägerstruktur (14) nach Anspruch 3,
**dadurch gekennzeichnet, dass** zwischen der Ummantelung (42) und den zweiten hohlen Stützelementen (26) oder den massiven Stützelementen (28) ein Hohlraum (44) gebildet ist, wobei der Hohlraum (44)
- ganz oder teilweise gefüllt oder
- durch Waben oder eine Gitterstruktur (46) verstärkt ist.

5. Selbsttragende Trägerstruktur (14) nach einem der vorhergehenden Ansprüche,
**dadurch gekennzeichnet, dass** die ersten hohlen Stützelemente (24), die zweiten hohlen Stützelemente (26) und/oder die massiven Stützelemente (28) zumindest einen Lagerabschnitt (58) zum Lagern zumindest einer Fahrzeugkomponente (19) und/oder einen Montageabschnitt (18) zum Montieren zumindest einer Fahrzeugkomponente (19) bilden.

6. Selbsttragende Trägerstruktur (14) nach einem der vorhergehenden Ansprüche,
**dadurch gekennzeichnet, dass** die Fahrzeugkomponente (19) als Lenksäule (42), als Head-up-Display (20), als Airbag, als Fahrzeugdisplay (54), als Fahrzeugsensor, als Handschuhfach (56) und/oder als andere elektrische oder elektronische Vorrichtungen ausgebildet ist.

7. Selbsttragende Trägerstruktur (14) nach Anspruch 5 oder Anspruch 5 und Anspruch 6,
**dadurch gekennzeichnet, dass** der Krümmer (30) zum Leiten von Luft zu dem Montageabschnitt (18) und/oder zu dem Lagerabschnitt (58) und/oder zu einer an der Trägerstruktur (14) montierten elektrischen Komponente ausgelegt ist.

8. Selbsttragende Trägerstruktur (14) nach einem der Ansprüche 6 oder 7,
**dadurch gekennzeichnet, dass** die Trägerstruktur (14) zumindest einen Schusskanal (60) für einen Airbag (52) des Fahrzeugs (12) bildet.

9. Selbsttragende Trägerstruktur (14) nach einem der vorhergehenden Ansprüche, **dadurch gekennzeichnet, dass** die Trägerstruktur (14) zumindest einen mechanischen Verbindungsabschnitt (36) zum Verbinden der Trägerstruktur (14) mit benachbarten Konstruktionselementen des Fahrzeugs (12) bildet.

10. Instrumententafel (10) in einem Fahrzeug (12), die aufweist
- eine Selbsttragende Trägerstruktur (14) nach einem der vorhergehenden Ansprüche, und
- eine Deckschicht (16), die die Trägerstruktur (14) bedeckt.

11. Instrumententafel (10) nach Anspruch 10,
**dadurch gekennzeichnet, dass**
- die Selbsttragende Trägerstruktur (14), und/oder
- die Deckschicht (16), oder
- die Instrumententafel (10) aus einem Stück gefertigt ist.

12. Fahrzeug (12), aufweisend
o eine erste A-Säule (50) und eine zweite A-Säule (50), und eine Instrumententafel (10) nach einem der Ansprüche 10 oder 11, oder
o eine Trägerstruktur (14) nach einem der Ansprüche 1 bis 9, die an der ersten A-Säule (50) und der zweiten A-Säule (50) befestigt ist.

13. Verfahren zum Herstellen einer Instrumententafel (10) nach einem der Ansprüche 10 oder 11 oder zum Herstellen einer Trägerstruktur (14) nach einem der Ansprüche 1 bis 9, das die Schritte des additiven Herstellens, insbesondere der Schmelzschichtung, der additiven Schneckenextrusionsfertigung oder des selektiven Lasersinterns aufweist.

14. Verfahren nach Anspruch 13, **dadurch gekennzeichnet, dass** die Selbsttragende Trägerstruktur (14) und/oder die Deckschicht (16) oder die Instrumententafel (10) in einem Stück hergestellt werden.

## Revendications

1. Structure de support autoportante (14) pour un tableau de bord (10) d'un véhicule (12) comprenant :
- un réseau (23) d'un ensemble de premiers éléments de supports creux (24) et de seconds éléments de supports creux (26) et/ou d'éléments de supports pleins (28) organisés en fonction des résultats d'une analyse de chemin de charge,
structure **caractérisée en ce que**
- les premiers éléments de supports creux (24) forment au moins un collecteur (30) utilisé comme conduite d'air comprenant :
* au moins une première entrée d'air (38) pour introduire l'air dans les éléments de support creux (12), et
* au moins une sortie d'air (40) pour guider l'air dans l'habitacle (64) d'un véhicule (12), et
- les premiers éléments de support creux (24), les seconds éléments de support creux (26) et/ou les éléments de support pleins (28) supportant au moins un composant (19) du véhicule dans ou sur le tableau de bord (10),
structure **caractérisée en ce que**
- au moins un certain des seconds éléments de support creux (26) et/ou au moins certains des éléments de support pleins (28) sont organisés de façon à former :
* une intersection (34) dans laquelle les seconds éléments de support creux (26) ou les éléments de support pleins (28) pénètrent dans les premiers éléments de support creux (24), ou
* une section de fusion (48) dans laquelle les seconds éléments de support creux (26) ou les éléments de support pleins (28) fusionnent avec les premiers éléments de support creux (24) de façon que les seconds éléments de support creux (26) ou les éléments de support pleins (28) s'engagent partiellement dans le collecteur (30).

2. Structure de support autoportante (14) selon la revendication 1, **caractérisée en ce que**
les seconds éléments de support creux (26) et/ou les éléments de support pleins (28) qui pénètrent ou qui fusionnent avec les premiers éléments de support creux (24) ont une forme optimisée pour l'écoulement de fluide.

3. Structure de support autoportante (14) selon l'une des revendications 1 ou 2,
**caractérisée en ce que**
les seconds éléments de support creux (26) ou les éléments de support pleins (28) sont enveloppés d'un habillage (42) à l'intérieur du collecteur (30).

4. Structure de support autoportante (14) selon la revendication 3, **caractérisée en ce que**
un espace creux (44) est laissé entre le revêtement (42) et les seconds éléments de support creux (26) ou les éléments de support pleins (28), l'espace creux (44) étant :
- complètement ou partiellement rempli, ou
- renforcé par des structures en nids d'abeilles ou une structure de grille (46).

5. Structure de support autoportante (14) selon l'une des revendications précédentes,
**caractérisée en ce que**
les premiers éléments de support creux (24), les seconds éléments de support creux (26) et/ou les éléments de support pleins (28) forment au moins une section portante (58) pour tenir au moins un composant de véhicule (19) et/ou une section de montage (18) pour monter au moins un composant de véhicule (19).

6. Structure de support autoportante (14) selon l'une des revendications précédentes,
**caractérisée en ce que**
le composant de véhicule (19) est sous la forme d'une colonne de direction (42), d'un affichage tête haute (20), d'un coussin gonflable, d'un affichage de véhicule (54), d'un capteur de véhicule, d'une boîte à gants (56) et/ou autre dispositif électrique ou électronique.

7. Structure de support autoportante (14) selon la revendication 5 ou la revendication 5 et la revendication 6,
**caractérisée en ce que**
le collecteur (30) est conçu pour guider l'air à la section de montage (18) et/ou à la section de support (58) et/ou à un composant électrique monté sur la structure de support (14).

8. Structure de support autoportante (14) selon l'une des revendications 6 ou 7,
**caractérisée en ce que**
la structure portante (14) forme au moins un canal à goulotte (60) pour un coussin gonflable (52) d'un véhicule (12).

9. Structure de support autoportante (14) selon l'une des revendications précédentes,
**caractérisée en ce que**
la structure portante (14) forme au moins une section de connexion mécanique (36) pour relier la structure portante (14) à des éléments de construction voisins du véhicule (12).

10. Tableau de bord (10) de véhicule (12) comprenant :
- une structure de support autoportante (14) selon l'une des revendications précédentes, et
- une couche de couverture (16) couvrant la structure de support (14).

11. Tableau de bord (10) selon la revendication 10,
**caractérisé en ce que**
- la structure de support autoportante (14), et/ou
- la couche de couverture (16), ou
- le tableau de bord (10) sont réalisés en une seule pièce.

12. Véhicule (12) comprenant :
* une première colonne A (50) et une seconde colonne A (50),
ainsi qu'un tableau de bord (10) selon l'une des revendications 10 ou 11, ou
* une structure de support (14) selon l'une des revendications 1 à 9, fixés à la première colonne A (50) et à la seconde colonne A (50).

13. Procédé de fabrication d'un tableau de bord (10) selon l'une des revendications 10 ou 11 ou pour fabriquer une structure de support (14) selon l'une des revendications 1 à 9,
comprenant les étapes de fabrication additives, en particulier le moulage par dépôt de fusion et de la fabrication additive par extrusion à vis ou le frittage par laser sélectif.

14. Procédé selon la revendication 13,
**caractérisé en ce que**
la structure de support autoportante (14) et/ou la couche de couverture (16) ou le tableau de bord (10) sont réalisés en une seule pièce.
